# EUROPEAN PATENT SPECIFICATION

(11) **EP 3 656 342 B1**
(45) Date of publication and mention of the grant of the patent: **21.09.2022**
(21) Application number: 18208342.8
(22) Date of filing: 26.11.2018
(51) Int. Cl.: A61C 5/77

(54) **DENTAL SPLINT**
ZAHNSCHIENE
ATTELLE DENTAIRE

(43) Date of publication of application: 27.05.2020
(73) Proprietor: Université de Genève, 1211 Genève (CH)
(72) Inventor: SAILER, Irena, 1206 Genève (CH); BURKHARDT, Felix, 4500 Solothurn (CH); LEE, Hyeonjong, Seoul (KR)
(74) Representative: KATZAROV S.A.

(56) References cited:
- WO-A1-2016/066552
- WO-A1-2018/022617
- WO-A1-2020/058855
- US-A1- 2018 078 342

## Description

### Technical Field

The present invention relates to a medical device and more particularly to a dental splint for standardized and predictable application of plastic reconstructive material on tooth surfaces.

### Background of the art

In the current practice of dentistry, clinicians often attempt to treat problems of compromised teeth that lost varying amounts of tooth substance. Such defects can be caused by caries or fractures of teeth, or by abrasively and/or erosively worn teeth. One common approach to treating the problem of loss of tooth substance is the use of splints which are means to cover the teeth and which are used as support to provide reconstructive resin onto the teeth.

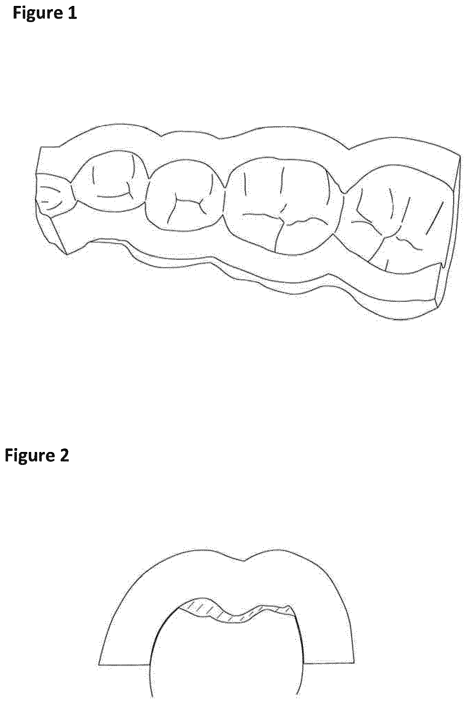

A typical type of dental splint has a U-shaped base and channel-forming wall-shaped reinforcements on the tongue and lip sides as shown in figures 1 and 2. A problem with these splints is the fact that they entirely cover the tooth thereby preventing access to the tooth and that they are made out of soft materials thereby leading to a very bad stabilization on the teeth.

An example of such conventional dental splint is disclosed in WO 2016/066552 showing a dental splint to be placed onto the teeth with resin to reconstruct the teeth. The problem of this splint is that it surrounds the teeth thereby preventing access to the teeth once in place. Also, since it is surrounding the teeth, it must be in soft material because otherwise it could not be taken off. Further in order to provide stabilization, it presents a support element 554 in contact with the teeth. Because of this tip 554, a second step of filling the hole (former space used by the tip) is needed.

It is, accordingly, an object of the present invention to provide an improved rigid splint and splinting method with good access for the removal of restorative material excess that requires minimal preparation and minimal bonding.

In this regard, a primary object of the invention is to solve the above-mentioned problems and more particularly to provide a dental splint presenting easy handling, easy access to the teeth while in position and improved stabilization. WO 2018/022617 A1 discloses a device for molding restorative dental material directly on a tooth.

### Summary of the invention

The above problems are solved by the present invention as defined in the appended claims.

A first aspect of the invention is a dental splint comprising a plurality of stamp portions each of them being adapted to receive a predetermined quantity of reconstructive material and to be placed on a predetermined tooth, a base support portion for supporting the stamp portions and a leg portion linking each stamp portion to the base support portion, characterized in that each stamp portion presents a surface adapted to cover the area of the tooth where material has to be added only. In this manner, only the necessary tooth surface is covered and free access is available for example for the dentist to remove the excess resin.

Preferably, the dental splint further comprises at least a distal stamp portion and a proximal stamp portion acting as stops and overlapping an occlusal surface of its respective teeth to the vestibular/lingual and distal/mesial directions to assure stabilization. In this manner, stabilization of the splint is enhanced.

In a preferred manner, the dental splint further comprises at least one intermediate stamp portion acting as stop.

According to a preferred embodiment of the present invention, the dental splint is composed of a stiff transparent resin. Therefore, the splint resin doesn't allow any bending or deformation while placing

According to the invention, each leg portion consist in one or more solid bars. Therefore, one permits a secure placement and light weight.

Preferably, the number of solid bars in each leg portion ranged from one to three bars depending on the area of the stamp portion. Therefore, each stamp portion is well designed to be stabilized.

According to a preferred embodiment of the present invention, the solid bars are cylindrical. The weight is further reduced.

Advantageously, the stamp portion comprises a weak region presenting a breaking line. Therefore, the splint can be retired used after reconstruction of a portion below the tooth's equator.

According to a preferred embodiment of the present invention, the breaking line is disposed on or above the equator of the new designed tooth.

Preferably, the base support portion has a rectangular cross shape. Therefore, handling is improved.

According to the invention, each stamp portion is individual and separated from its adjacent stamp portion. Therefore, even more space is free between the teeth, thereby allowing more access.

A second aspect of the invention is a dental splint manufacturing method comprising the steps of scanning at least a portion of an intraoral area including the teeth of a patient, designing a reconstructed shape of each tooth, determining a quantity of reconstructive material for each designing an onlay shape structure taking into account a quantity of reconstructive material to be received on each stamp of the onlay, fabricating the dental splint using 3D printing. The particular advantages of this device of the invention being similar to the ones of the method of the first aspect of the invention, they will not be repeated here.

### Brief description of the drawings

Further particular advantages and features of the invention will become more apparent from the following non-limitative description of at least one embodiment of the invention which will refer to the accompanying drawings, wherein
- Figure 1 represents a dental splint of the prior art,
- Figure 2 represents a cross section view of the stamp portion of the prior art,
- Figures 3 schematically represent a dental splint of the present invention,
- Figures 4 schematically represent a cross section view of a stamp portion of the present invention,
- Figures 5 and 6 shows perspective views of a dental splint of the present invention.

### Detailed description of the invention

The present detailed description is intended to illustrate the invention in a non-limitative manner since any feature of an embodiment may be combined with any other feature of a different embodiment in an advantageous manner.

Figure 1 and figure 2 show the prior art dental splint discussed above.

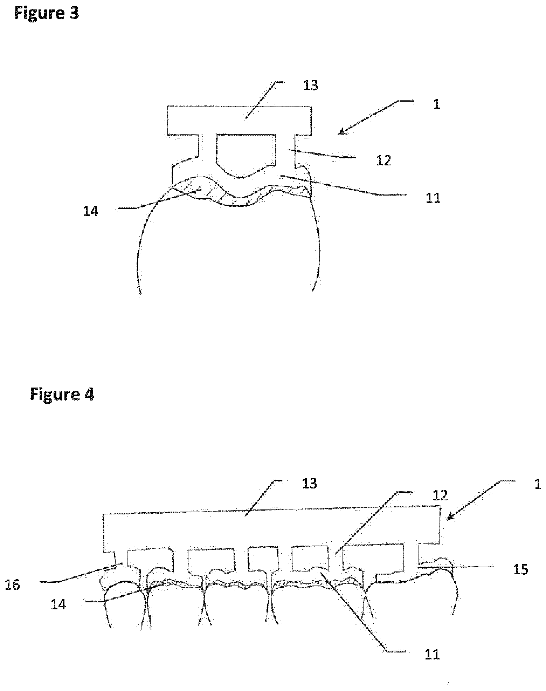

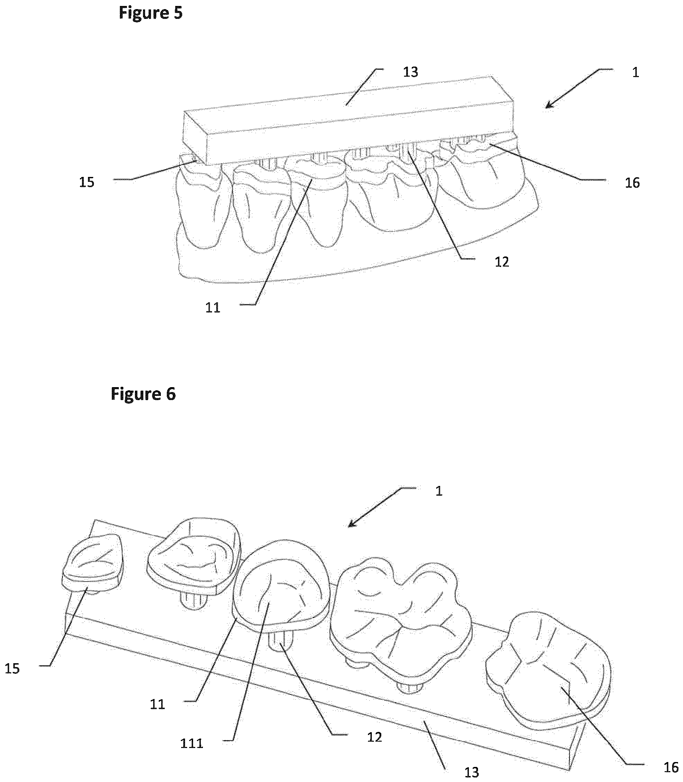

Figures 3-6 show an aspect of the invention which is a dental splint 1 composed of a stiff transparent material such as resin, milling or printing material or the same comprising a plurality of stamp portions 11 each of them being adapted to receive a predetermined quantity of reconstructive material 14 and to be placed on a predetermined tooth, a base support portion 13, preferably having rectangular cross shape, for supporting the stamp portions 11 and a leg portion 12, consisting in one or more cylindrical, solid bars, preferably from one or more, such as two, three or even more bars depending on the area 111 of the stamp portion 11, linking each stamp portion 11 to the base support portion 13, characterized in that each stamp portion 11 presents a surface 111 adapted to cover the area of the tooth where material 14 has to be added only. In this manner, only the necessary tooth surface is covered and free access is available for example for the dentist to remove the excess resin 14.

In order to assure stabilization, the dental splint 1 further comprises at least a distal stamp portion 15 and a proximal stamp portion 16 and possibly at least one intermediate stamp portion acting as stop, acting as stops and overlapping an occlusal surface of its respective teeth to the vest/ling and distal/mesial directions. In this manner, stabilization of the splint is enhanced.

Although not represented, the stamp portion 11 can comprise a weak region presenting a breaking line. This is especially the case when the stamp portion 11 is such that it has to surround its tooth because, for example, it has to be so much reconstructed that the stamp portion needs to go below the equator line (below the bulky portion of the tooth) of the tooth. Thus, the breaking line is disposed on the equator of the tooth so that the splint can be taken off after reconstruction of the portion below the tooth's equator.

As shown in the figures, each stamp portion 11 is individual and separated from its adjacent stamp portion. Therefore, even more space is free between the teeth, thereby allowing more access.

A second aspect of the invention is a dental splint manufacturing method comprising the steps of scanning at least a portion of an intraoral area including the teeth of a patient, designing a reconstructed shape of each tooth, determining a quantity of reconstructive material for each designing an onlay shape structure taking into account a quantity of reconstructive material to be received on each stamp of the only, fabricating the dental splint using 3D printing.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of the appended claims.

## Claims

1. Dental splint (1) comprising a plurality of stamp portions (11) each of them being adapted to receive a predetermined quantity of reconstructive material (14) and to be placed on a predetermined tooth, a base support portion (13) for supporting the stamp portions and leg portions (12), each consisting in one or more solid bars, linking each stamp portion (11) to the base support portion (13), **characterized in that** each stamp portion (11) is individual and separated from its adjacent stamp portion such as to provide free space between the teeth for better access and presents a surface (111) adapted to cover the area of the tooth where material (14) has to be added only.

2. Dental splint according to claim 1, **characterized in that** it further comprises at least a distal stamp portion (15) and a proximal stamp portion (16) acting as stops and overlapping an occlusal surface of its respective teeth to the vestibular/lingual and distal/mesial directions to assure stabilization.

3. Dental splint according to claim 2, **characterized in that** it further comprises at least one intermediate stamp portion acting as stop.

4. Dental splint according to any one of claims 1 to 3, **characterized in that** it is composed of a stiff transparent resin.

5. Dental splint according to claims 1 to 4, **characterized in that** the number of solid bars in each leg portion (12) ranged from one to three bars depending on the area of the stamp portion.

6. Dental splint according to claims 1 to 5, **characterized in that** solid bars are cylindrical.

7. Dental splint according to any one of claims 1 to 6, **characterized in that** the stamp portion (11) comprises a weak region presenting breaking line.

8. Dental splint according to claim 7, **characterized in that** the breaking line is disposed on or above the equator of the new designed tooth.

9. Dental splint according to any one of claims 1 to 8, **characterized in that** the base support portion (13) has a rectangular cross shape.

10. Method of manufacturing a dental splint according to any one of claims 1 to 9 comprising the steps of:
scanning at least an intraoral portion of the teeth of a patient,
designing an onlay shape structure taking into account a quantity of reconstructive material to be received on each stamp of the onlay,
fabricating the dental splint using a computer aided manufacturing method.

11. Dental splint manufacturing method according to claim 10 wherein the computer aided manufacturing method is 3D-printing.

12. Dental splint manufacturing method according to claim 10 or 11 wherein the computer aided manufacturing method is milling.

## Patentansprüche

1. Zahnschiene (1), umfassend eine Vielzahl von Stempelabschnitten (11), die jeweils dazu geeignet sind, eine vorbestimmte Menge an rekonstruktivem Material (14) aufzunehmen und auf einem vorbestimmten Zahn platziert zu werden, einen Basisträgerabschnitt (13) zum Tragen der Stempelabschnitte sowie Schaftabschnitte (12), die jeweils aus einem oder mehreren festen Stäben bestehen, die jeden Stempelabschnitt (11) mit dem Basisträgerabschnitt (13) verbinden, **dadurch gekennzeichnet, dass** jeder Stempelabschnitt (11) individuell und von seinem benachbarten Stempelabschnitt separat vorgesehen ist, um einen freien Raum zwischen den Zähnen für den besseren Zugang bereitzustellen, und eine Oberfläche (111) aufweist, die dazu geeignet ist, den Flächenbereich des Zahns zu bedecken, wo nur Material (14) hinzugefügt werden muss.

2. Zahnschiene nach Anspruch 1, **dadurch gekennzeichnet, dass** sie ferner zumindest einen distalen Stempelabschnitt (15) und einen proximalen Stempelabschnitt (16) umfasst, die als Anschläge dienen und eine okklusale Oberfläche ihrer jeweiligen Zähne in den vestibulären/lingualen und distalen/mesialen Richtungen überlappen, um die Stabilisierung sicherzustellen.

3. Zahnschiene nach Anspruch 2, **dadurch gekennzeichnet, dass** sie ferner zumindest einen dazwischenliegenden Stempelabschnitt umfasst, der als Anschlag dient.

4. Zahnschiene nach einem der Ansprüche 1 bis 3, **dadurch gekennzeichnet, dass** sie aus einem starren transparenten Kunststoff besteht.

5. Zahnschiene nach einem der Ansprüche 1 bis 4, **dadurch gekennzeichnet, dass** die Anzahl von festen Stäben in jedem Schaftabschnitt (12) in Abhängigkeit von dem Flächenbereich des Stempelabschnitts von eins bis drei reicht.

6. Zahnschiene nach Anspruch 1 bis 5, **dadurch gekennzeichnet, dass** die festen Stäbe zylindrisch sind.

7. Zahnschiene nach einem der Ansprüche 1 bis 6, **dadurch gekennzeichnet, dass** der Stempelabschnitt (11) eine geschwächte Region umfasst, die eine Bruchlinie aufweist.

8. Zahnschiene nach Anspruch 7, **dadurch gekennzeichnet, dass** die Bruchlinie an oder über dem Äquator des neu angelegten Zahns angeordnet ist.

9. Zahnschiene nach einem der Ansprüche 1 bis 8, **dadurch gekennzeichnet, dass** der Basisträgerabschnitt (13) eine rechteckige Querschnittsform aufweist.

10. Verfahren zur Herstellung einer Zahnschiene nach einem der Ansprüche 1 bis 9, umfassend die Schritte:
Abtasten zumindest eines intraoralen Abschnitts der Zähne eines Patienten,
Konzipieren einer Auflagestruktur unter Berücksichtigung einer Menge an rekonstruktivem Material, das auf jedem Stempel der Auflage aufgenommen werden soll,
Fertigen der Zahnschiene unter Verwendung eines computergestützten Herstellungsverfahrens.

11. Verfahren zur Herstellung einer Zahnschiene nach Anspruch 10, wobei das computergestützte Herstellungsverfahren 3D-Drucken ist.

12. Verfahren zur Herstellung einer Zahnschiene nach Anspruch 13, wobei das computergestützte Herstellungsverfahren Fräsen ist.

## Revendications

1. Attelle dentaire (1) comprenant une pluralité de parties moulées (11) chacune d'elles étant adaptée pour recevoir une quantité prédéterminée de matériau de reconstruction (14) et pour être placée sur une dent prédéterminée, une partie de support de base (13) pour supporter les parties moulées et des parties de patte (12), chacune étant constituée d'une ou de plusieurs barre(s) pleine(s), reliant chaque partie moulée (11) à la partie de support de base (13), **caractérisée en ce que** chaque partie moulée (11) est individuelle et séparée de sa partie moulée adjacente de manière à fournir un espace libre entre les dents pour un meilleur accès et présente une surface (111) adaptée pour couvrir la zone de la dent où le matériau (14) doit être ajouté uniquement.

2. Attelle dentaire selon la revendication 1, **caractérisée en ce qu'**elle comprend en outre au moins une partie moulée distale (15) et une partie moulée proximale (16) faisant office de butées et recouvrant une surface occlusale de ses dents respectives en directions vestibulaire/linguale et distale/mésiale pour assurer la stabilisation.

3. Attelle dentaire selon la revendication 2, **caractérisée en ce qu'**elle comprend en outre au moins une partie moulée intermédiaire faisant office de butée.

4. Attelle dentaire selon l'une quelconque des revendications 1 à 3, **caractérisée en ce qu'**elle est composée d'une résine transparente rigide.

5. Attelle dentaire selon les revendications 1 à 4, **caractérisée en ce que** le nombre de barres pleines dans chaque partie de patte (12) est compris entre une et trois barres en fonction de la zone de la partie moulée.

6. Attelle dentaire selon les revendications 1 à 5, **caractérisée en ce que** les barres pleines sont cylindriques.

7. Attelle dentaire selon l'une quelconque des revendications 1 à 6, **caractérisée en ce que** la partie moulée (11) comprend une région de faiblesse présentant une ligne de rupture.

8. Attelle dentaire selon la revendication 7, **caractérisée en ce que** la ligne de rupture est disposée sur ou au-dessus de l'équateur de la dent nouvellement conçue.

9. Attelle dentaire selon l'une quelconque des revendications 1 à 8, **caractérisée en ce que** la partie de support de base (13) a une forme rectangulaire transversale.

10. Procédé de fabrication d'une attelle dentaire selon l'une quelconque des revendications 1 à 9, comprenant les étapes de :
balayage d'au moins une partie intra-orale des dents d'un patient,
conception d'une structure de forme d'onlay en tenant compte d'une quantité de matériau de reconstruction à recevoir sur chaque partie moulée de l'onlay,
fabrication de l'attelle dentaire à l'aide d'un procédé de fabrication assistée par ordinateur.

11. Procédé de fabrication d'attelle dentaire selon la revendication 10, dans lequel le procédé de fabrication assistée par ordinateur est l'impression 3D.

12. Procédé de fabrication d'attelle dentaire selon la revendication 10 ou 11, dans lequel le procédé de fabrication assistée par ordinateur est le fraisage.
